# FASCICULE DE BREVET EUROPEEN

(11) **EP 0 660 625 B1**
(45) Date de publication et mention de la délivrance du brevet: **11.03.1998**
(21) Numéro de dépôt: 94402913.1
(22) Date de dépôt: 16.12.1994
(51) Int. Cl.: H04Q 7/24, H04Q 7/38

(54) **Procédé d'établissement de connexion dans un réseau d'accès en anneau d'un réseau de radiotéléphonie mobile**
Verbindungsaufbauverfahren in einem Ringzugriffsnetz für ein mobiles Funknetz
Method for setting up a link in a ring access network for a mobile radio network

(30) Priorité: 23.12.1993 FR 9315591
(43) Date de publication de la demande: 28.06.1995
(73) Titulaire: FRANCE TELECOM, 75015 Paris (FR)
(72) Inventeur: Plas, Patrick, F-75116 Paris (FR)
(74) Mandataire: Ballot, Paul Denis Jacques

(56) Documents cités:
- EP-A- 0 522 773
- IEEE JOURNAL ON SELECTED AREAS IN COMMUNICATION, vol.12, no.8, Octobre 1994, NEW YORK US pages 1365 - 1375, XP445508 A S. ACAMPORA ET AL 'An Architecture and Methodology for Mobile-Executed Handoff in Cellular ATM Networks'
- IEEE JOURNAL ON SELECTED AREAS IN COMMUNICATION, vol.11, no.6, Août 1993, NEW YORK US pages 830 - 841, XP403647 A D. MALYAN ET AL 'Network Architecture and Signalling for Wireless Personal Communications'
- IEEE GLOBAL TELECOMMUNICATIONS CONFERENCE, 1992, ORLANDO (US), 3 Décembre 1993, NEW-YORK (US) pages 11 - 15, XP357752 G P. POLLINI ET AL 'Handover Protocols between Metropolitan Area Networks'
- MRC MOBILE RADIO CONFERENCE, 13 Novembre 1991, NICE (FR) pages 243 - 249, XP444200 S.T.S. CHIA 'HANDOVER TECHNIQUES FOR A THIRD GENERATION MOBILE SYSTEM'

## Description

La présente invention concerne un procédé d'établissement de connexion dans un réseau d'accès en anneau d'un réseau de radiotéléphonie mobile. Elle propose une nouvelle architecture du réseau d'accès pour améliorer la qualité de la communication, qu'elle soit sous forme vocale ou de données, pendant les transferts automatiques intercellulaires. Cette amélioration de la qualité est obtenue à la fois par réduction de la durée du transfert lui-même et par l'introduction de la macrodiversité qui permet de maintenir, pendant un certain temps, le mobile en liaison avec l'ancienne station de base et avec la nouvelle station de base cible. Les informations transitant par ces deux liaisons sont combinées en un point du réseau afin d'offrir un seul flux d'informations de meilleure qualité.

Cette invention peut être mise en oeuvre de façon particulièrement intéressante sur deux types de réseaux existants, les réseaux conformes à la norme DQDB ("Distributed Queue Dual Bus") et ceux conformes à la norme ATM ("Asynchronous Transfer Mode").

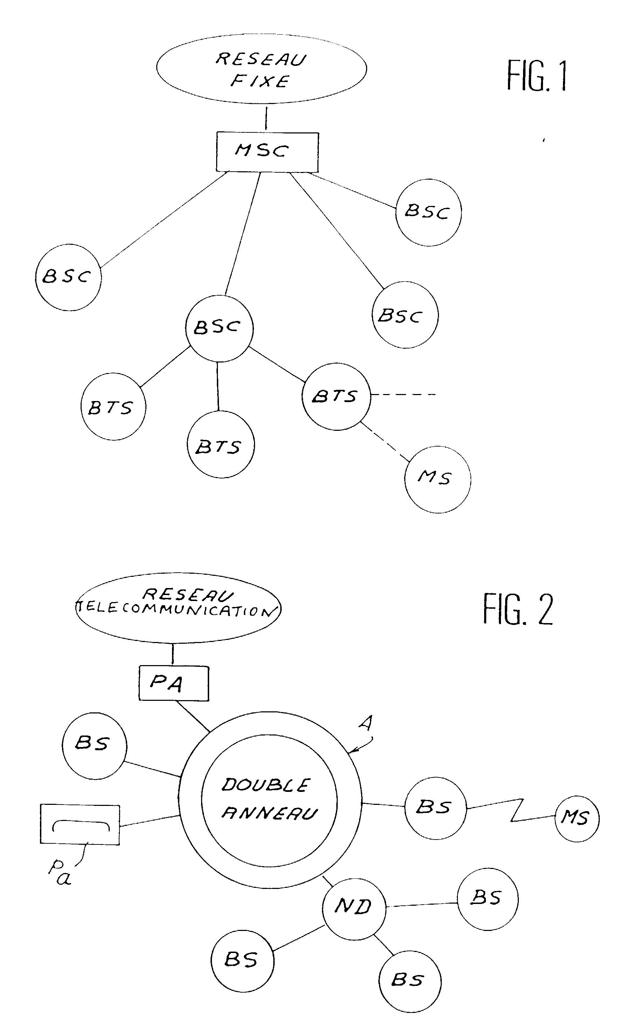

Le but d'un réseau de type GSM où la transmission entre station mobile et réseau est numérique, est d'offrir des services de télécommunications à des abonnés quels que soient leurs déplacements à l'intérieur d'une zone de service. L'abonné mobile utilise une station mobile généralement constituée d'un équipement mobile, qui fournit les capacités radio et logicielles nécessaires au dialogue avec le réseau. Les réseaux de radiotéléphonie actuels, comme le réseau GSM, présentent une architecture centralisée en étoile, comme le montre la figure 1, comprenant des stations de base (BTS, Base Transceiver Station) assurant la couverture radio de l'aire de service et reliées chacune à un contrôleur de station de base (BSC, Base Station Controller). Chaque contrôleur de station de base (BSC) est relié à un commutateur du service mobile (MSC, Mobile Services Switching Center) lui-même relié aux abonnés du réseau fixe. Physiquement, les informations et la signalisation circulent entre le mobile et le commutateur du service mobile (MSC). Le contrôleur (BSC) organise la supervision, l'allocation et la libération des canaux radio pour des activités qu'il n'analyse pas, ignorant les abonnés, leurs identités et leurs communications, tandis que le commutateur du service mobile gère l'établissement d'appel, la libération d'appel, et tout ce qui est lié aux identités des abonnés et de leurs communications.

En faisant l'hypothèse d'un développement rapide du radiotéléphone, il faut envisager des cellules de petite taille pour les zones à forte densité, mais la réduction de la taille des cellules par rapport aux systèmes actuels nécessite une amélioration des dispositifs permettant les transferts automatiques intercellulaires puisque ceux-ci seront plus fréquents, un transfert automatique intercellulaire (TAI) permettant à un mobile de changer son point d'attache au réseau terrestre tout en conservant la communication en cours.

Cette architecture générale en étoile des réseaux de radiotéléphonie nécessite l'établissement d'un nouveau circuit du point fixe jusqu'à la nouvelle station de base, ce qui impose d'impliquer la ou les entités situées entre le point fixe et les stations de base.

Ceci présente l'inconvénient de créer des temps de coupure importants, supérieurs à 200 ms pour le GSM, qui sont perceptibles par l'utilisateur ou qui interrompent la transmission des données pendant un temps non négligeable.

Un second inconvénient de cette architecture en étoile est l'impossibilité de communication directe entre les stations de base ou entre les contrôleurs de stations de base, car il est obligatoire de passer par l'intermédiaire du niveau hiérarchique supérieur c'est-à-dire le contrôleur de station de base ou le commutateur du service mobile. Cette communication indirecte charge inutilement le processeur qui gère ce niveau supérieur et retarde l'arrivée des messages sur la station de base destinataire. Ces messages servent en partie à contrôler les transferts intercellulaires.

Un troisième inconvénient est l'impossibilité de partager la bande passante totale entre les différentes extrémités de l'étoile dans le cas où une liaison entre une station de base et le contrôleur BSC, ou entre un contrôleur BSC et un commutateur MSC, est saturée alors que la liaison voisine est inoccupée.

Enfin, l'introduction de la macrodiversité, c'est-à-dire l'utilisation simultanée de deux ou plusieurs liens radio, impose aux systèmes de radiotéléphonie actuels de gérer un équipement particulier dans le réseau ou dans le mobile, et des procédures pour le déclenchement, la mise en oeuvre et l'arrêt de la macrodiversité. Cet équipement de macrodiversité doit gérer d'une part les deux circuits, l'ancien et le nouveau, concernés par la communication en cours, montants ou descendants des stations mobiles vers le réseau, et doit gérer d'autre part la libération de l'ancien lien lorsque celui-ci devient inutile. De plus, dans le cas de macrodiversité au mobile, il faut posséder ou établir un deuxième lien descendant qui va transporter la même information du réseau vers les stations mobiles que celle transportée par le premier lien descendant. Deux liens sont ainsi utilisés pour véhiculer la même information.

Un premier objet de l'invention est un réseau d'accès d'un réseau de radiotéléphonie mobile, caractérisé en ce qu'il est composé d'un double bus ou d'un double anneau contrarotatif auquel sont raccordées, directement ou par un noeud de concentration plusieurs stations de base pouvant accueillir chacune un ou plusieurs mobiles, la passerelle entre ledit réseau d'accès du réseau mobile et le réseau fixe de téléphonie étant assurée par un point d'accès, et en ce qu'à chaque connexion mobile entre le réseau fixe à travers le point d'accès et un mobile à travers une station de base gérant ledit mobile, est attribuée une paire de circuits virtuels, indépendants du type de service rendu par ladite connexion et de la station de base tant que le mobile reste dans le même réseau d'accès et dont l'identification est portée par l'en-tête des cellules qui assurent le transport des informations lors de la connexion.

Un autre objet de l'invention est un procédé de transfert automatique intercellulaire entre deux stations de base du réseau d'accès d'un réseau de radiotéléphonie mobile tel que caractérisé précédemment, accueillant le même mobile par deux liens radio distincts, comprenant les étapes suivantes :
1) envoi d'un message d'établissement d'un nouveau lien virtuel, par le mobile ou par la première station de base, vers la seconde station de base, contenant les références de la connexion en cours entre le point d'accès et ladite première station, ainsi que les identificateurs des circuits virtuels à utiliser en lecture et en écriture, identiques à ceux utilisés pour ladite connexion en cours à transférer ;
2) création dans les couches supérieures de la seconde station de base d'un contexte associé à ladite connexion à transférer ;
3) association, par la couche de la seconde station de base gérant les circuits virtuels de l'anneau, des identificateurs des circuits virtuels de ladite connexion à transférer au point d'extrémité de connexion correspondant au contexte lié à ladite connexion à transférer ;
4) destruction du contexte de la connexion dans la première station de base.

Concernant l'application de l'invention aux réseaux conformes à la norme DQDB, la publication de l'article de A.D. Malyan, R.W. Donaldson et V.C.M. Leung : "A Personal Communication Network Architecture Using the IEEE 802.6 MAN", Proc.ICC92, paper 342.6, 1992, propose d'utiliser le service isochrone offert par cette norme, ce qui ne permet pas de réaliser la macrodiversité sans modification du réseau d'accès. C'est pourquoi l'invention utilise le service asynchrone orienté connexion de la norme DQDB, comme cela sera expliqué plus loin.

Quant aux réseaux ATM, la publication de l'article de K.S. Meier-Hellstern, G.P. Pollini et D.J. Goodman : "A Wireless service for the IEEE 802.6 Metropolitan Area Network", PROC. Globecom 91, Phoenix, Arizona, Paper 55.6, December 2-5, 1991, propose l'utilisation de circuits virtuels pour maintenir la communication pendant un transfert automatique intercellulaire, sans proposer d'étendre le principe à un réseau en anneau offrant un service de circuits virtuels comme cela est possible avec l'ATM, ni d'utiliser la macrodiversité.

La même remarque peut être faite au sujet de l'article de Pollini and al : "Handover Protocols between Metropolitan Area Network", IEEE global Telecommunications Conference, 1992, Orlando US, 3.12.92.

Un autre objet de l'invention concerne un procédé de mise en oeuvre de macrodiversité entre deux stations de base reliées chacune par un lien radio distinct à un même mobile, comportant :
- une étape de transfert automatique intercellulaire entre lesdites deux stations de base, tel que défini par les étapes 1 à 3 de la caractéristique précédente, sans destruction du contexte de la connexion dans la première station de base et
- une étape d'utilisation d'une numérotation cohérente des segments transportés par les cellules émises lors de la connexion par le mobile vers le point d'accès et par le point d'accès vers le mobile dans le cas de la macrodiversité au mobile.

Deux autres objets de l'invention sont des procédés d'établissement d'une connexion entre un abonné d'un réseau de télécommunication et un mobile abonné d'un réseau de radiotéléphonie utilisant un réseau d'accès conforme l'un à la norme DQDB et l'autre à la norme ATM, ces réseaux d'accès étant composés d'un double anneau ou d'un double bus tel que caractérisé précédemment.

D'autres caractéristiques et avantages de l'invention apparaîtront à la lecture de la description suivante d'exemples particuliers de réalisation, illustrée par les dessins ci-annexés dans lesquels, outre la figure 1 déjà décrite et qui est une représentation schématique d'un réseau en étoile de type GSM :
- la figure 2 est un schéma d'un réseau d'accès selon l'invention ;
- la figure 3 indique schématiquement le fonctionnement d'un noeud d'un réseau selon l'invention ;
- la figure 4 indique schématiquement un transfert automatique intercellulaire ;
- la figure 5 est le schéma fonctionnel d'un commutateur d'anneau ATM dédié à l'application dans le cadre du réseau mobile local.

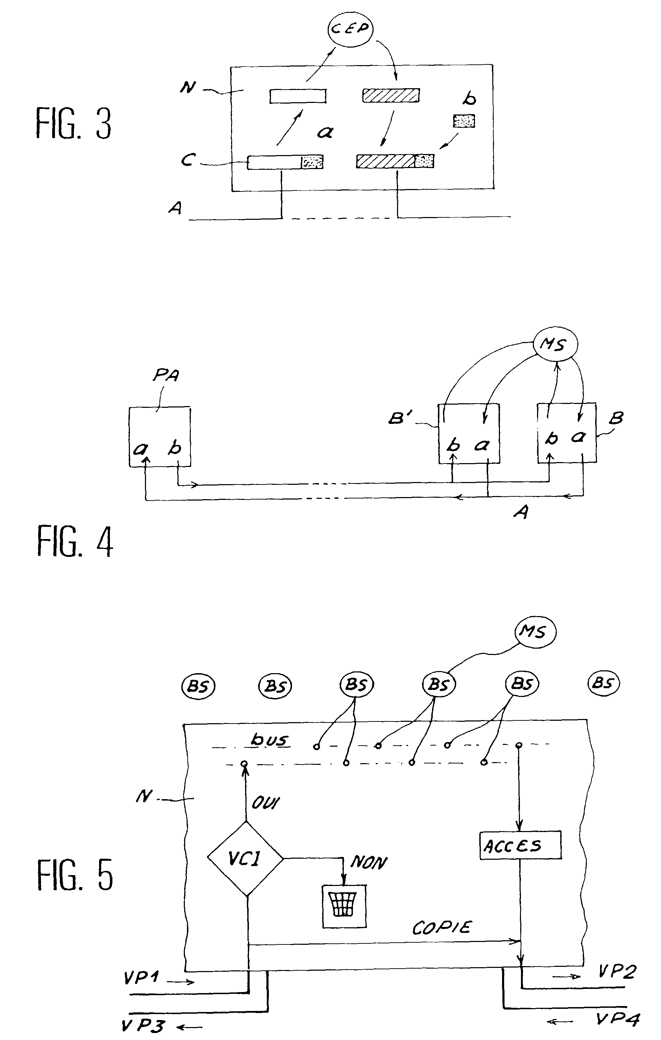

Le réseau d'accès, objet de l'invention, comporte un double bus ou un double anneau contrarotatif sur lequel sont interconnectées toutes les stations de base BS. Ce réseau d'accès sert d'intermédiaire entre le ou les mobiles MS qui se déplacent entre les stations de base et leurs correspondants fixes ou mobiles. Les stations de base se raccordent à ce réseau d'accès, autrement appelé réseau mobile local RML, soit directement soit par l'intermédiaire d'un noeud de concentration ND, comme le montre la figure 2 qui représente le schéma d'un réseau mobile local à double anneau selon l'invention. Lorsqu'une station de base est reliée au réseau par un noeud de concentration, sa fonction de contrôle peut être remplie par le noeud lui-même. Ce réseau mobile local est lui-même rattaché à un réseau de télécommunication par une passerelle, appelée point d'accès PA qui doit être situé à l'une des extrémités du double bus ou de l'anneau. Plusieurs réseaux mobiles locaux peuvent être interconnectés soit par le point d'accès soit par une passerelle spécifique pₐ.

Selon une caractéristique fondamentale de l'invention, un tel réseau d'accès est capable de gérer de manière autonome et sans l'intervention du point d'accès, c'est-à-dire directement entre les stations de base, les transferts des mobiles entre les stations de base qui lui sont rattachées. Ainsi, ni le réseau de télécommunication auquel il est rattaché ni le point d'accès ne participent à la mobilité en cours d'appel, à condition que le mobile reste dans le domaine d'action des stations de base rattachées au réseau mobile local.

Lorsqu'une communication doit être établie entre un mobile et son interlocuteur, ou l'inverse, une connexion mobile a lieu entre la station de base gérant ledit mobile et le point d'accès vers le réseau de télécommunication, à laquelle on attribue une paire de circuits virtuels. Chaque circuit virtuel est dédié à un sens de la communication entre le réseau de télécommunication et le mobile. On peut également faire en sorte que l'allocation des circuits virtuels soit coordonnée pour les deux bus de manière à ce que les identificateurs de circuits virtuels soient égaux. Il est connu que ce circuit est qualifié de virtuel car la capacité de communication n'est attribuée que lorsque deux entités du réseau - point d'accès et station de base - en ont besoin et il est indépendant du type de service rendu par la connexion.

L'identificateur du circuit virtuel utilisé lors d'une communication se trouve sur l'en-tête des cellules qui assurent le transport des informations.

Une communication entre un mobile et un interlocuteur nécessite une connexion mobile entre la station de base à laquelle le mobile est rattaché par radio, et le point d'accès du réseau mobile local. Cette station de base et le point d'accès constituent chacun un noeud de l'anneau ou du double bus et remplissent deux fonctions. La première fonction correspond à un processus d'interfonctionnement vers la radio dans le cas d'une station de base et vers le réseau de télécommunication dans le cas du point d'accès. La seconde fonction correspond à l'appartenance dudit noeud à l'anneau ou au double bus. Quand un mobile ou un interlocuteur, extérieur au réseau mobile local, veut établir une communication, il doit faire une demande d'établissement de connexion qui déclenche un processus d'interfonctionnement dans les couches hautes de signalisation se traduisant par des commandes - autrement appelées primitives - vers la couche gérant les circuits virtuels de l'anneau ou du double bus. A la demande des couches supérieures, la couche du noeud du double bus ou de l'anneau, soit la station de base ou le point d'accès, qui gère les circuits virtuels, associe l'identificateur du ou des circuits virtuels (VCI) au point d'extrémité de connexion (CEP : Connection End Point) représentant le prolongement vers l'extérieur de la connexion mobile en cours.

Pour chaque sens de la connexion, c'est-à-dire pour l'écriture et la lecture des informations sur le bus, qui seront lues par le point d'accès ou la station de base, il faut un circuit virtuel. Le message d'établissement de connexion adressé à un noeud du double bus ou de l'anneau comporte le ou les identificateurs de circuits virtuels. Le point d'extrémité de connexion, prolongeant la connexion mobile vers l'extérieur de l'anneau ou du double bus, est choisi par le noeud et ne sert que de référence interne. Lors de la communication, les cellules transportant les informations sur l'anneau et portant l'identificateur de circuit virtuel de lecture pour identifier le point d'extrémité de connexion sont adressées aux couches supérieures. Dans l'autre sens, aux cellules en écriture provenant de la couche supérieure sera ajouté l'identificateur de circuit virtuel d'écriture pour identifier l'autre point d'extrémité de connexion.

Les opérations effectuées, la couche du noeud qui gère les circuits virtuels, remonte une indication de succès ou d'échec vers les couches supérieures pour indiquer la fin de l'établissement de connexion. Le même enchaînement d'opérations est effectué des deux côtés de la connexion afin de permettre l'établissement de la connexion de bout en bout.

La figure 3 indique schématiquement le fonctionnement d'un noeud N du réseau mobile local. Dès que les circuits virtuels sont établis pour la connexion, les cellules C, circulant sur l'anneau A ou le double bus et portant l'identificateur a de circuit virtuel en lecture, sont copiées dans chaque noeud du réseau - point d'accès ou station de base - pour que leur analyse soit faite dans ledit noeud, alors qu'elles continuent à circuler sur le bus vers d'autres noeuds.

Puis, après analyse dudit identificateur et dans le cas où l'identificateur est connu et associé à un point d'extrémité de connexion, les cellules sont adressées à la couche supérieure du noeud par l'intermédiaire du point d'extrémité de connexion CEP concerné, sans ledit identificateur. Dans l'autre sens de la communication, lorsque le point d'extrémité de connexion CEP envoie des cellules d'informations au noeud du réseau, celui-ci leur ajoute l'identificateur b de circuit virtuel en écriture avant de les insérer dans le flux de l'anneau.

L'invention permet de réaliser le transfert automatique intercellulaire à l'intérieur du réseau mobile local.

Pour cela, le même identificateur de circuit virtuel est conservé et une seule des deux extrémités de la connexion est modifiée ; le point d'accès ne participe pas à l'opération.

Dans le cas d'un transfert entre deux stations de base B et B' par exemple, comme le montre la figure 4, alors qu'une première connexion est déjà établie entre le point d'accès du réseau mobile local et une première station de base B à laquelle est rattaché par liaison radio un mobile et que le mobile MS en question se déplace vers une seconde station B', cette seconde station reçoit à son tour un message d'établissement de connexion, message pouvant provenir soit du mobile lui-même après établissement du lien radio avec la seconde station de base, soit de la première station de base, soit d'une tierce entité spécialisée dans la gestion des transferts automatiques intercellulaires.

Selon l'invention, le message contient les références de la connexion en cours, ainsi que les identificateurs a et b des circuits virtuels à utiliser, qui sont les mêmes que ceux utilisés pour la connexion établie entre le point d'accès et la première station de base et qui est à transférer. Pour que ce transfert soit possible, il est nécessaire que toutes les stations de base soient disposées sur un même support, puissent lire toutes les communications et que le point d'accès soit situé à l'une des extrémités du double bus ou de l'anneau. Ce support doit donc être un anneau ou un double bus, et non un réseau en étoile comme dans l'art antérieur.

Ainsi, le point d'accès PA du réseau mobile local n'intervient pas et continue à émettre et à recevoir des cellules sur les mêmes circuits virtuels a et b de l'anneau A.

L'établissement du nouveau lien entre le point d'accès et le mobile est exécuté par des commandes ou primitives jusqu'à la couche gérant les circuits virtuels de la nouvelle station de base qui va alors établir le contexte nécessaire à la réception et à l'émission sur ces circuits virtuels.

D'un point de vue information, cela constitue un transfert de contexte associé aux circuits virtuels entre l'ancienne et la nouvelle station de base. Le point d'accès du réseau ne participant pas au transfert de la connexion mobile, le transfert se résume à un demi-établissement de connexion. Le message d'établissement permet de recréer le contexte de la connexion dans la nouvelle station de base tout en l'associant du côté de l'interface radio à des caractéristiques physiques différentes. Deux cas se présentent alors : ou bien on détruit le contexte de la connexion dans la première station de base ou bien on le maintient en même temps pour faire de la macrodiversité.

Faire de la macrodiversité signifie maintenir, pendant un certain temps, à la fois le lien qui relie le mobile à l'ancienne station de base et le lien qui le relie à la nouvelle station. Lorsque le transfert automatique intercellulaire est effectué, la connexion entre le point d'accès et le mobile a la configuration suivante : dans le sens descendant, du point d'accès vers le mobile, les mêmes cellules envoyées par le point d'accès sont lues par deux stations de base différentes qui, si le mobile utilise un opérateur de macrodiversité, les transmettent par deux chemins radio différents vers le mobile. Dans le sens montant du mobile vers le point d'accès, le mobile émet la même information aux deux stations de base, sous forme de cellules qu'elles transmettent au point d'accès avec le même circuit virtuel sur le bus, si le point d'accès utilise la macrodiversité.

Lorsque les cellules porteuses de l'information transitent du mobile en direction du point d'accès du réseau, ou inversement du point d'accès vers le mobile, il faut une base de référence commune aux deux stations de base pour que les deux segments homologues contenant la même information soient référencés de la même façon et que l'opérateur de macrodiversité au point d'accès, ou inversement au mobile, associe ces deux segments homologues. Pour cela, il est nécessaire que les segments transportés par les cellules soient numérotés afin d'être appariés deux à deux, dans le but d'être combinés. Cette opération vise à améliorer la qualité de l'information parvenant à son destinataire. La combinaison peut s'effectuer grâce à un choix binaire s'appuyant sur une comparaison. Il est également possible de combiner les deux segments homologues pour obtenir une information résultante de meilleure qualité.

Pour le sens descendant, la numérotation des segments dans les cellules peut être faite par le mobile lui-même qui affecte le numéro de séquence aux segments, ou par les stations de base concernées par la macrodiversité.

Dans ce dernier cas, il faut que deux segments identiques, envoyés chacun par une liaison radio entre le mobile et une des stations de base, soient dotés du même numéro, donné par les deux stations de base. Un des moyens pour obtenir une telle numérotation cohérente consiste à utiliser les numéros de trame radio des stations de base, lorsque lesdites stations de base sont synchronisées au moins au niveau des trames. Un autre moyen consiste à envoyer un top de synchronisation aux deux stations de base simultanément par le mobile lui-même au départ de la communication, de sorte que les stations reçoivent en même temps le même segment.

Pour le sens montant, la numérotation est effectuée par le point d'accès.

L'invention permet de réaliser facilement la macrodiversité tant au mobile que dans le réseau , sans adjonction de dispositifs protocolaires ou logiciels complexes ; il faut uniquement un opérateur de macrodiversité au point d'accès du réseau mobile local et/ou au mobile. En effet, si plusieurs segments portant le même numéro de séquence arrivent sur l'opérateur de macrodiversité, ils sont pris en compte, comparés ou combinés. Mais si un seul segment arrive à l'opérateur de macrodiversité, l'autre segment homologue s'étant perdu dans la liaison radio, ou n'ayant pas été transmis, il est transmis directement à l'abonné sans macrodiversité. Cela montre que le début et la fin d'une phase de macrodiversité n'ont pas besoin d'être annoncées explicitement. Il faut simplement que les deux liaisons radio entre le mobile et les stations de base, et donc les deux demi-connexions vers le point d'accès PA du réseau soient maintenues simultanément, durant la macrodiversité. En contrepartie, le réseau mobile local doit pouvoir allouer les ressources aisément pour autoriser le doublement du trafic montant du mobile vers le réseau pendant un court instant.

La macrodiversité au mobile ne nécessite pas le doublement du trafic descendant puisque la même information peut être copiée par les deux stations de base. Ceci est un avantage par rapport aux réseaux en étoile qui nécessitent le doublement du trafic descendant afin de pratiquer la macrodiversité au mobile.

Une application particulièrement intéressante de l'invention concerne l'utilisation d'un réseau conforme à la norme DQDB IEEE 802.6, qui a une architecture en anneau ou en double bus, comme support de transmission au réseau d'accès d'un réseau de radiotéléphonie.

Le réseau est constitué d'un double anneau, ou double bus, aux noeuds duquel sont raccordées les stations de base, soit directement soit par regroupement en sous-ensembles. Les deux têtes de bus de l'anneau peuvent être colocalisées au point d'accès PA, ce qui permet de répartir le flux des informations sur les deux bus. Ainsi, chaque circuit entre le point d'accès du réseau et une station de base peut être établi par l'un ou l'autre bus, ce qui permet une meilleure gestion du trafic, circuit par circuit, et une certaine résistance aux coupures de bus.

Actuellement, l'utilisation du service synchrone, telle que décrite dans la publication mentionnée auparavant, ne permet pas la macrodiversité. En effet, le service synchrone réserve, pour une communication dans le bus, un certain nombre d'octets qui sont générés à un rythme compatible avec le débit de la communication transportée. Lors d'une transmission d'information, une station de base écrit dans ces octets sans savoir s'ils sont libres ou non. Lors d'une opération de macrodiversité, une seconde station de base pourrait écrire sur des octets dans lesquels la première station aurait écrit et donc effacer ces premières informations.

De plus, le débit supporté dans le sens montant est double or les slots réservés sont attribués pour le débit de la communication, de sorte que le support de la macrodiversité est impossible sans modification du circuit virtuel alloué pour la communication.

Pour ces raisons, l'invention utilise le service orienté connexion de la norme DQBD, qui repose sur les slots QA ("Queue Arbitrated") alloués en fonction des besoins, en respectant le principe de file d'attente distribuée décrit dans la norme DQDB IEEE 802.6. La description de la norme DQDB est organisée en blocs fonctionnels dont les interactions sont gérées par une entité de gestion. Parmi ces blocs de fonction, il existe un bloc chargé de la gestion des slots QA ("Queue Arbitrated") et un bloc chargé de la fonction de convergence COCF ("Connection Oriented Convergence Function") utilisée pour le service orienté connexion. Pour réaliser l'interaction entre la fonction de convergence et la fonction de gestion de slots QA, l'entité de gestion (LME) utilise la primitive OPEN-CE-COCF d'une part, et la primitive CLOSE-CE d'autre part. La primitive OPEN-CE-COCF permet d'associer, au sein du bloc gérant les slots QA, un point d'extrémité de connexion CEP avec les circuits virtuels utilisés en écriture et en lecture, alors que la primitive CLOSE-CE annule cette association. Ces primitives sont spécifiées dans la norme, mais leur mise en oeuvre est optionnelle. Elles permettent d'associer une communication aux circuits virtuels qui la transportent. L'exemple suivant de mise en oeuvre de l'invention ne fait aucun a priori sur la fonction de convergence (COCF) pour les services orientés connexion.

Pour les opérations de lecture des informations provenant du réseau d'accès conforme à la norme DQDB, le bloc gérant les slots QA de la station de base reçoit toutes les cellules marquées comme étant occupées et concernant la connexion associée à un point d'extrémité de connexion CEP, contrôle la validité de l'en-tête avant de le retirer et passe les segments ainsi obtenus au point d'extrémité de connexion correspondant à l'identificateur de chemin virtuel VCI compris dans l'en-tête. Inversement, pour les opérations d'écriture des informations en provenance d'un mobile, vers le correspondant du mobile, le bloc gérant les slots QA de la station de base reçoit les segments émanant d'un point d'extrémité de connexion, leur ajoute l'en-tête contenant l'identificateur de circuit virtuel associé à ce point d'extrémité de connexion et spécifié par la fonction de convergence puis dirige la cellule ainsi formée vers le bus adéquat en direction du point d'accès du réseau. Les mêmes opérations d'écriture et de lecture ont lieu au point d'accès pour transmettre et recevoir les segments vers le correspondant du mobile.

Une autre application particulièrement intéressante de l'invention concerne l'utilisation d'un réseau conforme à la norme ATM, comme support de transmission au réseau d'accès d'un réseau de radiotéléphonie. C'est une technique de transfert sur un réseau de communication large bande, permettant de transporter tout type d'information sous la forme de cellules de longueur constante, comportant un en-tête de 5 octets et un champ d'informations de 48 octets. Dans l'en-tête se trouvent, entre autres, un champ d'identification de chemins virtuels ("Virtual Paths Identifier ") VPI, et un champ VCI ("Virtual Channel Identifier") à 16 bits qui identifie le numéro de la communication dont les données sont en cours de transfert.

L'ensemble des stations de base du réseau sont réparties en sous-ensembles qui correspondent à des zones de commutation. Une zone de commutation peut ne contenir qu'une seule station de base et les stations de base d'une même zone de commutation sont connectées à un seul et même commutateur ATM. Le point d'accès PA est lui-même un commutateur ATM. Un commutateur ATM est connecté au réseau de télécommunication par au moins quatre chemins virtuels, deux pour l'arrivée des informations et deux pour leur départ. Les chemins virtuels sont organisés en paire arrivée-départ pour former un bus de données dans chaque sens. Les mêmes chemins virtuels sont d'ailleurs connectés à d'autres commutateurs faisant partie du même anneau, par l'intermédiaire du réseau de brassage. Chaque commutateur ATM constitue alors un noeud de l'anneau, dont les deux bus sont constitués par les connexions des chemins virtuels. Une paire de circuits virtuels est associée à chaque communication établie entre le point d'accès et un mobile.

Pour chaque bus de l'anneau, le commutateur ATM reçoit l'ensemble du flux, recopie les cellules vers le chemin virtuel de départ correspondant au chemin virtuel d'arrivée et compare l'identificateur VCI de chaque cellule aux identificateurs VCI intéressant chacune des stations de base de la zone de commutation. Dans le cas où cette cellule intéresse une station de base, le commutateur enlève l'identificateur VPI du chemin virtuel de l'en-tête, le remplace par un numéro de bus correspondant au chemin virtuel utilisé par la cellule et copie la cellule vers la station.

Un des commutateurs ATM de l'anneau doit remplir une fonction de tête de bus, c'est-à-dire servir de puits pour les cellules qui arrivent.

Les fonctions de commutation que doit assurer un commutateur ATM entre les différentes stations de base de sa zone de commutation peuvent être assurées par deux bus bidirectionnels ou par une distribution directe des cellules internes au commutateur en fonction de sa table de commutation.

Lors de l'établissement d'un circuit virtuel, l'étage de commutation est programmé pour extraire du flux entrant les cellules ayant l'identificateur de circuit virtuel VCI indiqué. L'opération de commutation peut être complétée par la sélection d'une couche d'adaptation, sélection au besoin décentralisée dans chaque station de base.

La figure 5 est le schéma fonctionnel d'un commutateur d'anneau ATM, dédié à l'application dans le cadre du réseau mobile local.

Ainsi le noeud N ou commutateur ATM, dans lequel entre le premier chemin virtuel VP₁, copie systématiquement les cellules vers le chemin virtuel de sortie VP₂ et examine les identificateurs des circuits virtuels VCI portés par l'en-tête des cellules qui arrivent.

S'il n'existe pas d'identificateurs VCI correspondant à une connexion gérée par une des stations de base BS raccordées, il jette la cellule. Dans le cas contraire, il l'envoie sur un bus bidirectionnel interne auquel sont raccordées les stations de base. La station de base concernée peut lire les cellules qui lui sont attribuées et les envoyer au mobile MS, sans l'identificateur VCI dans l'en-tête. Dans l'autre sens, le mobile peut écrire et la station de base concernée utilise un circuit virtuel. Les cellules écrites doivent suivre une procédure d'accès vers les chemins virtuels, VP₂ ou VP₃ selon le sens dans lequel les cellules doivent aller. En effet, elles arrivent sur un double bus où circulent les informations provenant de VP₁ et VP₄. La copie assure la continuité de l'anneau, c'est-à-dire que les informations sur les chemins virtuels continuent à circuler à travers le noeud, même si certaines sont dirigées vers des stations de base. Le point d'accès est aussi un commutateur ATM qui fonctionne suivant le même principe et assure les fonctions de puits pour chacun des bus.

On constate que l'invention s'applique aussi bien à un réseau ATM qu'à un réseau DQDB, il lui suffit d'un service de circuit virtuel et de cellules possédant un en-tête avec l'identificateur du circuit virtuel auquel elles appartiennent.

Les avantages que présentent l'invention sont les suivants. Les transferts intercellulaires sont possibles sans intervention du niveau hiérarchique supérieur qu'est le point d'accès de l'anneau, car les stations de base dialoguent directement entre elles grâce à un anneau ou un double bus. Ainsi le temps de transfert est réduit, la charge de travail du point d'accès est moindre ainsi que la quantité de signalisation.

L'utilisation des circuits virtuels permet d'introduire facilement la macrodiversité et par conséquent d'améliorer la qualité pendant les transferts.

Les opérations d'insertion et de délétion des liens pour la macrodiversité sont implicites. Chaque station de base a accès à l'ensemble de la bande passante de l'anneau, ce qui permet de profiter totalement de l'effet d'agrégation. De plus, l'invention est totalement indépendante de l'interface radio existant entre le mobile et les stations de base.

## Revendications

1. Procédé d'établissement d'une connexion entre un mobile abonné d'un réseau de radiotéléphonie et un abonné d'un réseau de télécommunication, par connexion mobile entre un point d'accès dudit réseau de télécommunication et une station de base gérant le mobile et raccordée à un réseau d'accès du réseau de radiotéléphonie composé d'un double bus ou d'un double anneau contrarotatif, caractérisé en ce que la station de base est raccordée au réseau d'accès directement ou par un noeud de concentration, et en ce que le procédé comprend les étapes suivantes :
- attribution d'une paire de circuits virtuels, à chaque connexion mobile, indépendants du type de service rendu par ladite connexion et de la station de base tant que le mobile reste dans le même réseau d'accès mobile, chaque circuit virtuel étant dédié à un sens de la communication entre le réseau de télécommunication et le mobile, soit la lecture et l'écriture des informations sur le bus, et dont les identificateurs (a, b) respectivement de lecture et d'écriture sont portés par l'en-tête des cellules qui assurent le transport des informations ;
et pour les opérations de lecture, au niveau de chaque noeud (N) du réseau d'accès :
- circulation des cellules (c) sur l'anneau,
- copie desdites cellules,
- analyse de l'identificateur de lecture (a) de circuits virtuels,
- passage des cellules, auxquelles on a ôté l'identificateur de lecture (a), à la couche supérieure du noeud à destination du point d'extrémité de connexion,
et pour les opérations d'écriture,
- envoi des cellules d'informations par le point d'extrémité de connexion au noeud du réseau,
- ajout de l'identificateur d'écriture (b) aux cellules,
- insertion desdites cellules dans le flux de l'anneau.

2. Procédé de transfert automatique intercellulaire entre deux stations de base d'un réseau d'accès d'un réseau de radiotéléphonie, composé d'un double bus ou d'un double anneau contrarotatif, accueillant le même mobile par deux liens radio distincts, caractérisé en ce que les stations de base sont raccordées au réseau d'accès directement ou par un noeud de concentration et en ce qu'il comprend les étapes suivantes :
- attribution d'une paire de circuits virtuels, à chaque connexion mobile, indépendants du type de service rendu par ladite connexion et de la station de base tant que le mobile reste dans le même réseau d'accès mobile, chaque circuit virtuel étant dédié à un sens de la communication entre le réseau de télécommunication et le mobile, soit la lecture et l'écriture des informations sur le bus, et dont les identificateurs (a, b) respectivement de lecture et d'écriture sont portés par l'en-tête des cellules qui assurent le transport des informations,
- envoi d'un message d'établissement d'un nouveau lien vers la seconde station de base (B'), directement par le mobile (MS), message contenant soit les identificateurs (a,b) des circuits virtuels de lecture et d'écriture de la connexion en cours entre le point d'accès PA et le mobile, soit une référence de contexte permettant à la seconde station de base de demander ces identificateurs à la première station de base (B).

3. Procédé de mise en oeuvre de macrodiversité entre deux stations de base reliées chacune par un lien radio distinct à un même mobile, caractérisé en ce qu'il comporte les étapes suivantes :
- une étape de transfert automatique intercellulaire entre lesdites deux stations de base, tel que défini par la revendication 2,
- une étape d'utilisation d'une numérotation cohérente des segments transportés par les cellules émises lors de la connexion par le mobile vers le point d'accès ou par le point d'accès vers le mobile dans le cas de macrodiversité au mobile.

4. Procédé selon la revendication 3, caractérisé en ce que l'étape de numérotation cohérente des segments consiste à utiliser les numéros de trames radio des stations de base dans le cas où les stations de base sont synchronisées au moins au niveau des trames, pour le sens descendant.

5. Procédé selon la revendication 3, caractérisé en ce que l'étape de numérotation cohérente des segments consiste à envoyer un top de synchronisation aux deux stations de base simultanément par le mobile au départ de la communication, pour le sens descendant.

6. Procédé d'établissement d'une connexion entre un abonné d'un réseau de télécommunication et un mobile abonné d'un réseau de radiotéléphonie utilisant, comme support de transmission à son réseau d'accès, un réseau conforme à la norme DQDB ("Distributed Queue Dual Bus") et composé d'un double anneau ou double bus, caractérisé en ce que les stations de base sont raccordées au réseau d'accès directement ou par un noeud de concentration, en ce qu'une paire de circuits virtuels est attribuée à chaque connexion mobile, indépendants du type de service rendu par ladite connexion et de la station de base tant que le mobile reste dans le même réseau d'accès mobile, chaque circuit virtuel étant dédié à un sens de la communication entre le réseau de télécommunication et le mobile, soit la lecture et l'écriture des informations sur le bus, et dont les identificateurs (a, b) respectivement de lecture et d'écriture sont portés par l'en-tête des cellules qui assurent le transport des informations, et en ce qu'il comprend :
une première étape d'association par la primitive (OPEN CE COCF) utilisée par l'entité de gestion LME, au sein du bloc fonctionnel gérant les slots QA ("Queue Arbitrated"), d'un point d'extrémité de connexion (CEP) avec les circuits virtuels utilisés en lecture et en écriture,
et en ce qu'il comprend les étapes suivantes remplies par le bloc fonctionnel gérant les slots QA :
pour les opérations de lecture des informations provenant du réseau conforme à la norme DQDB :
- réception de toutes les cellules marquées comme étant occupées,
- contrôle de la validité de l'en-tête desdites cellules,
- suppression dudit en-tête comportant l'identificateur de circuit virtuel en lecture,
- transmission des segments ainsi obtenus aux couches supérieures vers le point d'extrémité de connexion correspondant à l'identificateur de circuit virtuel compris dans l'en-tête,
et pour les opérations d'écriture sur le réseau conforme à la norme DQDB :
- réception, par les couches supérieures, des segments émis par un point d'extrémité de connexion,
- ajout de l'en-tête contenant l'identificateur de circuit virtuel en écriture associé à ce point d'extrémité de connexion et spécifié par la fonction de convergence COCF ("Connection Oriented Convergence Function") utilisée pour le service orienté connexion,
- transmission de la cellule ainsi formée vers le bus approprié du double anneau ou bus vers le point homologue du réseau.

7. Procédé d'établissement d'une connexion entre un abonné d'un réseau de télécommunication et un mobile abonné d'un réseau de radiotéléphonie utilisant, comme support de transmission à un réseau d'accès, un réseau conforme à la norme ATM ("Asynchronous Transfer Mode") comprenant plusieurs zones de commutation contenant chacune une ou plusieurs stations de base connectées à un commutateur ATM unique par zone et qui est relié au réseau par au moins quatre chemins virtuels, organisés en paire arrivée-départ pour former un bus de données dans chaque sens, et qui constitue un noeud de l'anneau du réseau d'accès, caractérisé en ce que les stations de base sont raccordées au réseau d'accès directement ou par un noeud de concentration, en ce qu'une paire de circuits virtuels est attribuée à chaque connexion mobile indépendants du type de service rendu par ladite connexion et de la station de base tant que le mobile reste dans le même réseau d'accès mobile, chaque circuit virtuel étant dédié à un sens de la communication entre le réseau de télécommunication et le mobile, soit la lecture et l'écriture des informations sur le bus, et dont les identificateurs (a, b) respectivement de lecture et d'écriture sont portés par l'en-tête des cellules qui assurent le transport des informations, et en ce qu'il comprend les étapes suivantes, pour les opérations de lecture :
- copie systématique des cellules arrivant par un chemin virtuel (VP1, respectivement VP4) vers le chemin virtuel de départ (VP2, respectivement VP3) correspondant au chemin virtuel d'arrivée,
- examen des identificateurs des circuits virtuels (VCI) des cellules arrivant dans le commutateur ATM par le chemin virtuel (VP1, VP4) d'arrivée,
- destruction de la cellule examinée si l'identificateur (VCI) ne correspond pas à une connexion gérée par une station de base raccordée au commutateur ATM ou par le point d'accès du réseau,
- envoi de la cellule sur un bus bidirectionnel interne, auquel sont raccordées les stations de base, respectivement le réseau de télécommunication, si l'identificateur correspond à une connexion gérée par une station de base, respectivement par le point d'accès,
- lecture des cellules par ladite station de base, respectivement le point d'accès, et envoi au mobile, respectivement au réseau de télécommunication, sans l'identificateur dans l'en-tête,
et pour les opérations d'écriture :
- envoi par le mobile à une station de base des segments auxquels la station de base ajoute un identificateur de circuit virtuel,
- accès des cellules écrites vers les chemins virtuels (VP2, respectivement VP3) selon le sens de circulation des cellules.

## Claims

1. Method of establishing a connection between a mobile subscriber of a radio-telephony network and a subscriber of a telecommunications network by mobile connection between a point of access to said telecommunications network and an access network of the radio telephony network, comprising a dual bus or a dual counter-rotating loop, characterised in that the base station is connected to the access network directly or via a concentration node and the method comprises the following steps:
- with each mobile connection, a pair of virtual circuits is allocated, irrespective of the type of service being provided by said connection and base station provided the mobile remains within the same mobile access network, each virtual circuit being dedicated to a direction of the communication between the telecommunication network and the mobile, i.e. reading and writing data on the bus, and whose read and write identifiers (a, b) are respectively carried by the header of the cells bearing the data;
and for reading transactions, at the level of each node of the access network:
- the cells (c) are circulated on the loop,
- said cells are copied,
- the read identifier (a) of virtual circuits is analysed,
- the cells from which the read identifier (a) has been removed are passed to the upper layer of the node which is destined for the connection end point,
and for writing transactions,
- the data cells are sent via the connection end point to the network node,
- the write identifier (b) is added to the cells,
- said cells are inserted in the loop flow.

2. Method of automatic, inter-cellular transfer between two base stations of an access network to a radio-telephony network, comprising a dual bus or a dual counter-rotating loop, hosting the same mobile by two separate radio links, characterised in that the base stations are connected to the network directly or via a concentration node and in that it comprises the following steps:
- with each mobile connection, a pair of virtual circuits is allocated, irrespective of the type of service being provided by said connection and base station provided the mobile remains within the same mobile access network, each virtual circuit being dedicated to one direction of the communication between the telecommunication network and the mobile, i.e. reading and writing data on the bus, and whose read and write identifiers (a, b) are respectively carried by the header of the cells bearing the data;
- a message establishing a new link is sent to the second base station (B') by the mobile (MS) directly, this message containing either the identifiers (a, b) of the virtual read and write circuits of the current connection between the points of access PA and the mobile, or a context reference enabling the second base station to request these identifiers from the first base station (B).

3. A method of operating by macro-diversity between two base stations each connected to a same mobile by a separate radio link, characterised in that it comprises the following steps:
- an automatic, inter-cellular transfer step between said two base stations, such as defined by claimed 2,
- a step using coherent numbering of the segments carried by the cells transmitted by the mobile to the point of access on connection or by the point of access to the mobile where macro-diversity is applied at the mobile.

4. A method as claimed in claim 3, characterised in that the step whereby the segments are coherently numbered consists in using the numbers of radio frames from the base stations where the base stations are synchronised at least on the level of the frames, for the downward direction.

5. A method as claimed in claim 3, characterised in that the step whereby the segments are coherently numbered consists in sending a synchronisation top to the two base stations simultaneously by the mobile at the start of the communication, for the downward direction.

6. A method of establishing a connection between a subscriber of a telecommunication network and a mobile subscriber of a radio-telephony network, using as a transmission carrier to its access network a network which complies with the DQDB standard (Distributed Queue Dual Bus) and comprising a dual loop or dual bus, characterised in that the base stations are connected to the access network directly or via a concentration node, a pair of virtual circuits is assigned to each mobile connection, irrespective of the type of service being provided by said connection and base station provided the mobile remains within the same mobile access network, each virtual circuit being dedicated to one direction of the communication between the telecommunication network and the mobile, i.e. reading and writing the data on the bus, and whose read and write identifiers (a, b) are respectively carried by the header of the cells bearing the data and in that it comprises:
a first step whereby the primitive (OPEN CE COCF) used by the management entity LME within the functional block managing the QA slots (Queue Arbitrated) associates a connection end point (CEP) with the virtual circuits used during reading and writing,
and it comprises the following steps, operated by the functional block managing the QA slots:
for transactions of reading data from the network in compliance with the DQDB standard:
- receiving all the cells marked as being occupied,
- checking the validity of the header of said cells,
- deleting said header containing the identifier of the virtual circuit being read,
- transmitting segments thus obtained to the upper layers towards the connection end point corresponding to the virtual circuit identifier contained in the header,
and for transactions of writing data on the network in compliance with the DQDB standard:
- receiving, via the upper layers, segments transmitted by a connection end point
- adding the header containing the identifier of the virtual circuit being written to associated with this connection end point and specified by the convergence function COCF (Connection Oriented Convergence Function) used for the oriented connection service,
- transmission of the cell set up in this manner to the appropriate bus of the dual loop or bus towards the corresponding point of the network.

7. A method of establishing a connection between a subscriber of a telecommunication network and a mobile subscriber of a radio-telephony network using, as the transmission carrier to an access network, a network complying with the ATM standard (Asynchronous Transfer Mode) comprising several switching zones, each containing one or more base stations connected to a single ATM switch per zone and which is linked to the network by at least four virtual paths, organised in arrival-departure pairs to form a data bus in each direction, and which constitutes a node of the loop of the access network, characterised in that the base stations are connected to the access network directly or via a concentration node, a pair of virtual circuits is assigned to each mobile connection, irrespective of the type of service being provided by said connection and base station provided the mobile remains within the same mobile access network, each virtual circuit being dedicated to one direction of the communication between the telecommunication network and the mobile, i.e. reading and writing data on the bus, and whose read and write identifiers are carried by the header of the cells bearing the data and in that it comprises the following steps, for the reading transactions:
- systematically copying the cells arriving via a virtual path (VP1, respectively VP4) to the virtual path of departure (VP2, respectively VP3) corresponding to the virtual path of arrival,
- examining virtual circuit identifiers (VCI) of cells arriving at the ATM switch via the virtual path (VP1, VP4) of arrival,
- destroying the cell examined if the identifier (VCI) does not correspond to a connection managed by a base station connected to the ATM switch or via the point of access to the network,
- sending the cell on an internal bi-directional bus, to which the base stations, respectively the telecommunication network, are connected if the identifier corresponds to a connection managed by a base station or the point of access respectively,
- reading cells by the said base station, respectively the point of access, and sending these to the mobile, respectively to the telecommunication network, without the identifier in the header,
and for writing transactions:
- sending by the mobile to a base station the segments to which the base station adds a virtual circuit identifier,
- access of the written cells towards the virtual paths (VP2, respectively VP3) in the direction in which the cells are flowing.

## Patentansprüche

1. Verfahren zur Herstellung einer Verbindung zwischen einem Mobilteilnehmer eines Funktelefonnetzes und einem Teilnehmer eines Fernmeldenetzes durch Mobilfunkverbindung zwischen einem Zugangspunkt des Fernmeldenetzes und einer Funkfeststation, welche den Mobilteilnehmer verwaltet und an einem Zugangsnetz des Funktelefonnetzes angeschlossen ist, das aus einem Doppelbus oder einem gegenläufigen Doppelring besteht, dadurch gekennzeichnet, daß die Funkfeststation direkt oder über einen Konzentrationsknoten an dem Zugangsnetz angeschlossen ist und daß das Verfahren die folgenden Schritte umfaßt:
- Zuweisung von einem Paar virtueller Verbindungen zu jeder Mobilfunkverbindung, die unabhängig sind von der Art des von der Verbindung geleisteten Dienstes und der Funkfeststation, solange der Mobilteilnehmer in demselben Mobilzugangsnetz bleibt, wobei jede virtuelle Verbindung einer Kommunikationsrichtung zwischen dem Fernmeldenetz und dem Mobilteilnehmer wie dem Lesen und dem Schreiben der Informationen auf dem Bus gewidmet ist, und deren Lese- bzw. Schreibidentifikatoren (a, b) von dem Kopf der Zellen getragen werden, welche die Informationen transportieren;
und für die Leseoperationen in Höhe jedes Knotens (N) des Zugangsnetzes:
- Zirkulation der Zellen (c) auf dem Ring,
- Kopie der Zellen,
- Analyse der Leseidentifikatoren (a) der virtuellen Verbindungen,
- Weiterleitung der Zellen, denen der Leseidentifikator (a) entnommen wurde, zur höheren Schicht des Knotens in Richtung auf den Verbindungsendpunkt,
und für die Schreiboperationen,
- Senden der Informationszellen durch den Verbindungsendpunkt zum Knoten des Netzes,
- Hinzufügen des Schreibidentifikators (b) zu den Zellen,
- Einfügen der Zellen in den Fluß des Ringes.

2. Verfahren zum automatischen Zwischenzellentransfer zwischen zwei denselben Mobilteilnehmer über zwei verschiedene Funkverbindungen empfangenden Funkfeststationen eines Zugangsnetzes eines Funktelefonnetzes, das aus einem Doppelbus oder einem gegenläufigen Doppelring besteht, dadurch gekennzeichnet, daß die Funkfeststationen direkt oder über einen Konzentrationsknoten an dem Zugangsnetz angeschlossen sind und daß es die folgenden Schritte umfaßt:
- Zuweisung von einem Paar virtueller Verbindungen zu jeder Mobilfunkverbindung, die unabhängig sind von der Art des von der Verbindung geleisteten Dienstes und der Funkfeststation, solange der Mobilteilnehmer in demselben Mobilzugangsnetz bleibt, wobei jede virtuelle Verbindung einer Kommunikationsrichtung zwischen dem Fernmeldenetz und dem Mobilteilnehmer wie dem Lesen und dem Schreiben der Informationen auf dem Bus gewidmet ist, und deren Lese- bzw. Schreibidentifikatoren (a, b) von dem Kopf der Zellen getragen werden, welche die Informationen transportieren;
- Senden einer Nachricht zur Herstellung einer neuen Verbindung zur zweiten Funkfeststation (B') direkt durch den Mobilteilnehmer (MS), eine Nachricht, die entweder die Identifikatoren (a, b) der virtuellen Lese- und Schreibverbindungen der laufenden Verbindung zwischen dem Zugangspunkt PA und dem Mobilteilnehmer oder eine Kontextreferenz enthält, die es der zweiten Funkfeststation ermöglicht, diese Identifikatoren von der ersten Funkfeststation (B) anzufordern.

3. Verfahren zur Herstellung eines Makrodiversitys zwischen zwei Funkfeststationen, die jeweils über eine andere Funkverbindung mit einem selben Mobilteilnehmer verbunden sind, dadurch gekennzeichnet, daß es die folgenden Schritte umfaßt:
- einen Schritt des automatischen Zwischenzellentransfers zwischen den beiden Funkfeststationen, wie durch den Anspruch 2 definiert,
- einen Schritt der Verwendung einer kohärenten Numerierung der Segmente, die von den Zellen transportiert werden, welche während der Verbindung von dem Mobilteilnehmer zum Zugangspunkt oder im Falle eines Makrodiversitys beim Mobilteilnehmer von dem Zugangspunkt zum Mobilteilnehmer gesendet werden.

4. Verfahren nach Anspruch 3, dadurch gekennzeichnet, daß der Schritt der kohärenten Numerierung der Segmente für die absteigende Richtung darin besteht, die Funkrahmennummern der Funkfeststationen zu verwenden, wenn die Funkfeststationen zumindest auf der Ebene der Rahmen synchronisiert sind.

5. Verfahren nach Anspruch 3, dadurch gekennzeichnet, daß der Schritt der kohärenten Numerierung der Segmente für die absteigende Richtung darin besteht, zu Beginn der Kommunikation von dem Mobilteilnehmer gleichzeitig an die zwei Funkfeststationen einen Synchronisierimpuls zu senden.

6. Verfahren zur Herstellung einer Verbindung zwischen einem Teilnehmer eines Fernmeldenetzes und einem Mobilteilnehmer eines Funktelefonnetzes, das als Übertragungsmedium zu seinem Zugangsnetz ein Netz verwendet, das der DQDB-Norm ("Distributed Queue Dual Bus") entspricht und aus einem Doppelring oder Doppelbus besteht, dadurch gekennzeichnet, daß die Funkfeststationen direkt oder über einen Konzentrationsknoten an dem Zugangsnetz angeschlossen sind, daß jeder Mobilfunkverbindung ein Paar virtueller Verbindungen zugewiesen wird, die unabhängig sind von der Art des von der Verbindung geleisteten Dienstes und der Funkfeststation, solange der Mobilteilnehmer in demselben Mobilzugangsnetz bleibt, wobei jede virtuelle Verbindung einer Kommunikationsrichtung zwischen dem Fernmeldenetz und dem Mobilteilnehmer wie dem Lesen und dem Schreiben der Informationen auf dem Bus gewidmet ist, und deren Lese- bzw. Schreibidentifikatoren (a, b) von dem Kopf der Zellen getragen werden, welche die Informationen transportieren, und daß es umfaßt:
einen ersten Schritt der Verknüpfung eines Verbindungsendpunktes (CEP) mit den zum Lesen und Schreiben verwendeten virtuellen Verbindungen durch das von der Verwaltungseinheit LME verwendete Primitiv-Element (OPEN CE COCF), der innerhalb des die QA-Slots ("Queue Arbitrated") verwaltenden Funktionsblockes erfolgt,
und daß es die folgenden Schritte umfaßt, die von dem die QA-Slots verwaltenden Funktionsblock durchgeführt werden: für die Operationen des Lesens der Informationen, die aus dem der DQDB-Norm entsprechenden Netz kommen:
- Empfang sämtlicher als belegt markierter Zellen,
- Prüfung der Gültigkeit der Köpfe der Zellen,
- Beseitigung des Kopfes, der den Identifikator der virtuellen Leseverbindung enthält,
- Übertragung der so erhaltenen Segmente zu den höheren Schichten in Richtung auf den Verbindungsendpunkt, der dem in dem Kopf enthaltenen Identifikator der virtuellen Verbindung entspricht,
und für die Operationen des Schreibens auf das der DQDB-Norm entsprechende Netz:
- Empfang der von einem Verbindungsendpunkt gesendeten Segmente durch die oberen Schichten,
- Hinzufügen des Kopfes, der den Identifikator der virtuellen Schreibverbindung enthält, die mit diesem Verbindungsendpunkt verknüpft ist und durch die für den verbindungsorientierten Dienst verwendete Konvergenzfunktion COCF ("Connection Oriented Convergence Function") spezifiziert wird.
- Übertragung der so gebildeten Zelle zum entsprechenden Bus des Doppelringes oder -busses in Richtung auf den homologen Punkt des Netzes.

7. Verfahren zur Herstellung einer Verbindung zwischen einem Teilnehmer eines Fernmeldenetzes und einem Mobilteilnehmer eines Funktelefonnetzes, das als Übertragungsmedium zu einem Zugangsnetz ein Netz verwendet, das der ATM-Norm ("Asynchronous Transfer Mode") entspricht und mehrere Vermittlungszonen umfaßt, die jeweils eine oder mehrere Funkfeststationen enthalten, welche mit einer einzigen ATM-Vermittlungseinrichtung pro Zone verbunden sind, die mit dem Netz durch mindestens vier virtuelle Wege verbunden ist, welche in Eingangs/Ausgangs-Paaren organisiert sind, um in jeder Richtung einen Datenbus zu bilden, und die einen Knoten des Ringes des Zugangsnetzes bildet, dadurch gekennzeichnet, daß die Funkfeststationen direkt oder über einen Konzentrationsknoten an dem Zugangsnetz angeschlossen sind, daß jeder Mobilfunkverbindung ein Paar virtueller Verbindungen zugewiesen wird, die unabhängig sind von der Art des von der Verbindung geleisteten Dienstes und der Funkfeststation, solange der Mobilteilnehmer in demselben Mobilzugangsnetz bleibt, wobei jede virtuelle Verbindung einer Kommunikationsrichtung zwischen dem Fernmeldenetz und dem Mobilteilnehmer wie dem Lesen und dem Schreiben der Informationen auf dem Bus gewidmet ist, und deren Lese- bzw. Schreibidentifikatoren (a, b) von dem Kopf der Zellen getragen werden, welche die Informationen transportieren, und daß es für die Leseoperationen die folgenden Schritte umfaßt:
- systematische Kopie der über einen virtuellen Weg (VP1 bzw. VP4) eintreffenden Zellen auf den virtuellen Ausgangsweg (VP2 bzw. VP3), der dem virtuellen Eingangsweg entspricht,
- Prüfung der Identifikatoren der virtuellen Verbindungen (VCI) der über den virtuellen Eingangsweg (VP1, VP4) in der ATM-Vermittlungseinrichtung eintreffenden Zellen,
- Zerstörung der geprüften Zelle, wenn der Identifikator (VCI) keiner Verbindung entspricht, die von einer mit der ATM-Vermittlungseinrichtung verbundenen Funkfeststation oder von dem Zugangspunkt des Netzes verwaltet wird,
- Senden der Zelle über einen internen bidirektionalen Bus, an dem die Funkfeststationen bzw. das Fernmeldenetz angeschlossen sind, wenn der Identifikator einer von einer Funkfeststation bzw. dem Zugangspunkt verwalteten Verbindung entspricht,
- Lesen der Zellen durch die Funkfeststation bzw. den Zugangspunkt und Senden zum Mobilteilnehmer bzw. zum Fernmeldenetz ohne Identifikator in dem Kopf,
und für die Schreiboperationen:
- Senden der Segmente durch den Mobilteilnehmer an eine Funkfeststation, denen die Funkfeststation einen Identifikator der virtuellen Verbindung hinzufügt,
- Zugang der geschriebenen Zellen zu den virtuellen Wegen (VP2 bzw. VP3) gemäß der Zirkulationsrichtung der Zellen.
